# EUROPÄISCHE PATENTSCHRIFT

(11) **EP 1 574 744 B1**
(45) Veröffentlichungstag und Bekanntmachung des Hinweises auf die Patenterteilung: **14.11.2007**
(21) Anmeldenummer: 05003945.2
(22) Anmeldetag: 23.02.2005
(51) Int. Cl.: F16F 15/131, F16F 15/10

(54) **Schwingungsisolierendes, scheibenförmiges Bauteil**
Vibration isolating disc-shaped component
Composant anti-vibratoire en forme de disque

(30) Priorität: 11.03.2004 DE 102004012321
(43) Veröffentlichungstag der Anmeldung: 14.09.2005
(73) Patentinhaber: LuK Lamellen und Kupplungsbau Beteiligungs KG, 77815 Bühl (DE)
(72) Erfinder: Mende, Hartmut, 77815 Bühl (DE); Jäckel, Johann, 77830 Bühlertal (DE)

(56) Entgegenhaltungen:
- DE-A1- 10 002 259
- DE-A1- 10 109 248
- DE-A1- 19 825 249

## Beschreibung

Die Erfindung bezieht sich auf schwingungsisolierende, scheibenförmige Bauteile wie im Oberbegriff des Anspruchs 1 definiert.

Derartige schwingungsisolierende, scheibenförmige Bauteile sind beispielsweise in verschiedenartigen Ausgestaltungen durch die DE 199 59 962 A1 sowie den darin angegebenen Stand der Technik vorgeschlagen worden. Weitere Ausgestaltungsmöglichkeiten solcher schwingungsisolierenden, scheibenförmigen Bauteilen sind bekannt geworden durch die DE 198 40 215 A1, EP 0984184 A1 und EP 0990817 A2.

Durch die DE 198 25 249 A1 ist ein aus einer Mehrzahl von Teilen zusammengesetztes, scheibenartiges Übertragungselement bekannt geworden.

Bei dem vorerwähnten Stand der Technik werden die zur Schwingungsisolierung erforderlichen Eigenschaften des scheibenförmigen Bauteils dadurch gewährleistet, dass wenigstens ein speziell hierfür bezüglich seiner Dicke und Federeigenschaften ausgestaltetes Element, teilweise auch in Kombination mit zusätzlichen Elementen, verwendet wird. Dieses scheibenförmige Element dient zur Drehmomentübertragung zwischen einer antreibenden Motorwelle und einem von diesem Element radial außen getragenen Funktionsbauteil.

Das schwingungsisolierende, scheibenförmige Bauteil gemäß der vorliegenden Erfindung soll zumindest teilweise die von diesem selbst gebildeten Bereiche sowie die mit dem Bauteil verbundenen, weiteren Bauteile von einer Antriebswelle, wie insbesondere der Kurbelwelle einer Brennkraftmaschine, derart schwingungsmäßig entkoppeln, dass die durch Schwingungen der Antriebswelle auf die weiteren Bauteile normalerweise übertragenen Axial- und Taumelschwingungen zumindest weitgehend vermieden bzw. auf ein akzeptables Maß verringert werden können. Durch die erfindungsgemäße Ausgestaltung eines schwingungsisolierenden, scheibenförmigen Bauteils soll auch der Einsatz von Stahl ermöglicht werden, der keine besonders ausgeprägten Federeigenschaften besitzt. Weiterhin soll das schwingungsisolierende, erfindungsgemäße, scheibenförmige Bauteil in besonders einfacher und kostengünstiger Weise herstellbar sein.

Dies wird bei einem schwingungsisolierenden, scheibenförmigen Bauteil gemäß der eingangs genannten Art gemäß einer Ausgestaltungsvariante dadurch erzielt, dass das Innen- und das Außenelement mittels eines Trennschnittes aus dem gleichen Flachmaterial hergestellt ist und die drehfeste Verbindung der beiden Elemente durch Zurückdrücken des Innenelements in das Außenelement zumindest teilweise gewährleistet ist. In besonders vorteilhafter Weise kann das erfindungsgemäß ausgestaltete, scheibenförmige Bauteil aus Stahlblech hergestellt werden. Das erfindungsgemäße, scheibenförmige Bauteil, das eine so genannte Flexplate-Wirkung aufweisen soll, kann somit durch einfaches Umschneiden bzw. Stanzen hergestellt werden, wodurch eine kostengünstige Produktion gewährleistet wird. Die bereits zuvor beschriebenen lsolierungseigenschaften bezüglich von der Brennkraftmaschine angeregten Axial- und Taumelschwingungen sollen bei dem erfindungsgemäßen, scheibenförmigen Bauteil zumindest teilweise durch die wenigstens eine, zwischen den beiden ringartigen Elementen vorhandene Trennstelle gewährleistet werden. Der der Erfindung zugrunde liegende Gedanke besteht darin, dass durch die Trennstelle bzw. den Trennschnitt eine Gefügeunterbrechung innerhalb des scheibenförmigen Bauteils entsteht, wodurch die an diese Trennstelle angrenzenden Bereiche der beiden ringartigen Elemente eine gewisse, wenn auch sehr geringe Verformung, vorzugsweise elastische Verformung, haben können. Dadurch kann zumindest eine gewisse Abkoppelung des ringartigen Außenelements gegenüber dem mit der Abtriebswelle einer Brennkraftmaschine verbundenen und somit den von der Brennkraftmaschine generierten Schwingungen ausgesetzten ringartigen Innenelement gewährleistet werden.

Je nach Anwendungsfall kann es auch zweckmäßig sein, wenn das erfindungsgemäße, scheibenförmige Bauteil mehr als zwei ringartige Elemente besitzt, die aus dem gleichen Ausgangsmaterial, wie zum Beispiel StW23, durch Einbringung entsprechend vieler Trennschnitte gebildet sind.

Das erfindungsgemäße, scheibenförmige Bauteil bzw. zumindest das ringartige Außenelement kann durch entsprechende Ausgestaltung auch eine gewisse Eigenelastizität aufweisen, so dass zumindest ein Anteil der Entkoppelungsfunktion bezüglich Schwingungen in ähnlicher Weise wie dies beim Stand der Technik der Fall ist gewährleistet werden kann.

In besonders einfacher Weise kann der zwischen den ringartigen Elementen vorhandene Trennschnitt durch eine einfache Stanzoperation hergestellt werden. Das Stanzwerkzeug kann dabei in vorteilhafter Weise derart ausgestaltet sein, dass die durch den Trennschnitt gebildeten Trennstellen eine gewisse Rauhigkeit aufweisen, welche gewährleistet, dass beim Zurückdrücken bzw. Aufeinanderpressen der beiden Elemente ein gewisser Formschluss entsteht, der eine verdrehfeste Verbindung zwischen den beiden Elementen gewährleistet.

In vorteilhafter Weise kann das ringartige Innenelement Verschraubungsausnehmungen aufweisen und die Trennstelle radial außerhalb dieser Ausnehmungen vorgesehen sein. Durch die Verschraubungsausnehmungen können Schrauben hindurchgeführt werden zur Befestigung des Bauteils an der Abtriebswelle einer Brennkraftmaschine. Besonders zweckmäßig kann es sein, wenn die Trennstelle sehr nahe bzw. angrenzend an die vorerwähnten Verschraubungsausnehmungen vorgesehen wird. Dadurch kann ein in Bezug auf die erwünschte Schwingungsisolierung besonders wirksames, scheibenförmiges Bauteil geschaffen werden. Die "Flexplate-Eigenschaften" des erfindungsgemäßen, scheibenförmigen Bauteils sind somit besonders groß.

Je nach Anwendungsfall kann der Verlauf der Trennstelle jedoch auch von den Verschraubungsausnehmungen radial beabstandet sein.

Weiterhin kann es zweckmäßig sein, wenn die die Trennstelle bildenden Trennflächen der beiden Elemente mit Stanzausbrüchen ausgebildet sind, die zumindest über einen Teilbereich der Materialdicke der ineinander gepressten Elemente einen in Achsrichtung des scheibenförmigen Bauteils kegelstumpfartig verlaufenden Abschnitt bilden. Durch einen solchen Abschnitt kann eine axiale, formschlüssige Verbindung zumindest in einer axialen Relativbewegungsrichtung zwischen den beiden Elementen gewährleistet werden. Um eine einwandfreie, axiale Sicherung der beiden ringartigen Elemente zueinander zu gewährleisten kann es zweckmäßig sein, wenn auf der der fiktiven Spitze des vorerwähnten, kegelstumpfförmigen Abschnittes zugewandten Seite des scheibenförmigen Bauteils die beiden Elemente eine weitere axial wirksame, formschlüssige Verbindung besitzen. Eine derartige formschlüssige Verbindung kann durch zumindest partiell im Bereich der Trennstelle in wenigstens eines der Elemente eingebrachte Materialverstemmungen gebildet sein. Derartige Materialverstemmungen sind vorzugsweise über den umfangsmäßigen Verlauf der entsprechenden Trennstelle gleichmäßig verteilt vorgesehen. Derartige formschlüssige Verbindungen können jedoch auch unabhängig von dem Vorhandensein eines kegelstumpfartig verlaufenden Stanzausbruches Verwendung finden, und, falls notwendig, auch auf beiden Seiten des scheibenförmigen Bauteils.

In vorteilhafter Weise kann die Trennstelle derart ausgestaltet werden, dass sie zwar einen mit der Rotationsachse des scheibenförmigen Bauteils zumindest annähernd zusammenfallenden Mittelpunkt aufweist, jedoch von einer Kreisform abweicht. Die Trennstelle kann beispielsweise polygonartig oder verzahnungsähnlich in Umfangsrichtung verlaufen. Durch derartige Ausgestaltungen wird eine einwandfreie Drehmomentübertragung zwischen den beiden ineinander gepressten Elementen gewährleistet.

Zur axialen Sicherung der zumindest zwei, ein scheibenförmiges Bauteil bildenden, ringartigen Elemente kann es zweckmäßig sein, wenn zusätzlich zu der zwischen den die Trennstelle bildenden Trennflächen vorhandenen Pressverbindung eine axiale Sicherung zwischen dem inneren und dem äußeren Element vorhanden ist. Eine solche axiale Sicherung kann in einfacher Weise durch wenigstens ein, auf zumindest einer Seite des scheibenförmigen Bauteils befestigtes, zusätzliches Element gebildet sein. Ein derartiges zusätzliches Element kann in einfacher Weise scheibenförmig ausgebildet werden. Bei Verwendung eines solchen scheibenförmigen Elementes kann dieses mittels der durch die Öffnungen des inneren Elements durchführbaren Schrauben verspannbar sein. Hierfür kann das Element ebenfalls entsprechende Ausnehmungen aufweisen. Vorteilhaft kann es sein, wenn das scheibenförmige Sicherungselement axial federnd ausgebildet ist. Hierfür kann es beispielsweise aus Federstahl hergestellt sein. Das wenigstens eine, scheibenförmige Sicherungselement kann vorteilhafter Weise mit einem der ringartigen Element fest verbunden sein und an dem anderen dieser Elemente mit axialer Vorspannung federnd anliegen. Hierfür kann das scheibenförmige Element im unverbauten Zustand zumindest leicht kegelstumpfförmig ausgebildet sein und/oder entsprechende axiale Anformungen aufweisen, die bei der Montage dieses scheibenförmigen Elementes eine Verspannung desselben bewirken. Durch eine elastisch verspannte Montage eines solchen scheibenförmigen Elementes kann dieses zwischen den beiden, das scheibenförmige Bauteil bildenden, ringartigen Elementen eine Dämpfungswirkung erzeugen, und zwar aufgrund seiner mit elastischer Vorspannung erfolgenden Abstützung an einem der ringartigen Elemente.

Ein gemäß der Erfindung ausgestaltetes, schwingungsisolierendes, scheibenförmiges Bauteil kann insbesondere als Bestandteil zur Bildung eines Schwungrades verwendet werden. Dabei kann das ringartige Außenelement im radial äußeren Bereich ein ringförmiges Massenbauteil tragen, welches eine Reibfläche für eine Kupplungsscheibe bildet.

Ein gemäß der Erfindung ausgestaltetes, schwingungsisolierendes, scheibenförmiges Bauteil kann jedoch auch zur Bildung der Primärmasse eines so genannten Zweimassenschwungrades dienen. Zweimassenschwungräder sind beispielsweise in dem eingangs zitierten Stand der Technik ebenfalls beschrieben. Das scheibenförmige Bauteil kann dabei dasjenige Bauteil der Primärmasse bilden, welches unmittelbar mit der Abtriebswelle einer Brennkraftmaschine verbunden ist. Ein derartiges scheibenförmiges Bauteil kann in vorteilhafter Weise radial äußere Bereiche besitzen, welche zumindest teilweise eine Kammer zur Aufnahme von in Umfangsrichtung wirkenden Schraubenfedern bildet. Die Schraubenfedern sind dabei Bestandteil einer zwischen den beiden Schwungmassen des Zweimassenschwungrades wirksamen Dämpfers. Zur Bildung der Kammer kann das ringartige Außenelement an seinem Außenbereich axial sich erstreckende Abschnitte besitzen, welche einstückig mit dem ringartigen Außenelement ausgebildet sein können.

Das einen Bestandteil der Primärmasse eines Zweimassenschwungrades bildende, scheibenförmige Bauteil kann in vorteilhafter Weise derart ausgestaltet sein, dass das ringartige Innenelement an seinem radial inneren Umfang einen axialen Ansatz trägt, an bzw. auf dem die Sekundärmasse gelagert werden kann. Ein derartiger axialer Ansatz kann einstückig mit dem Innenelement ausgebildet sein oder aber durch ein zusätzliches, vom Innenelement getragenes Bauteil gebildet sein.

Bei Verwendung eines erfindungsgemäßen, scheibenförmigen Bauteils zur Bildung eines Zweimassenschwungrades mit einer Kammer zur Aufnahme von in Umfangsrichtung wirksamen Schraubenfedern kann es vorteilhaft sein, wenn die Sekundärmasse Beaufschlagungsbereiche trägt, die sich zumindest teilweise in die Kammer hinein erstrecken und zur Beaufschlagung der Schraubenfedern dienen.

Anhand der Figuren 1 bis 13 sei die Erfindung näher erläutert.

### Dabei zeigen:

- Figur 1: einen Teilschnitt durch ein Zweimassenschwungrad, bei dem ein erfindungsgemäß ausgebildetes, scheibenförmiges Bauteil Verwendung findet,
- Figur 1a: eine Vergrößerung der Trennstelle eines erfindungsgemäßen, schwingungsisolierenden, scheibenförmigen Bauteils,
- Fig. 2 bis 6: verschiedene Einzelheiten bzw. Ausführungsvarianten von schwingungsisolierenden, scheibenförmigen Bauteilen, die aus wenigstens zwei ringartigen Elementen bestehen.
- Fig. 7 bis 13: in Ansicht verschiedene Ausführungsvarianten von Trennstellenführungen zwischen den ringartigen Elementen erfindungsgemäß ausgebildeter, schwingungsisolierender, scheibenförmiger Bauteile.

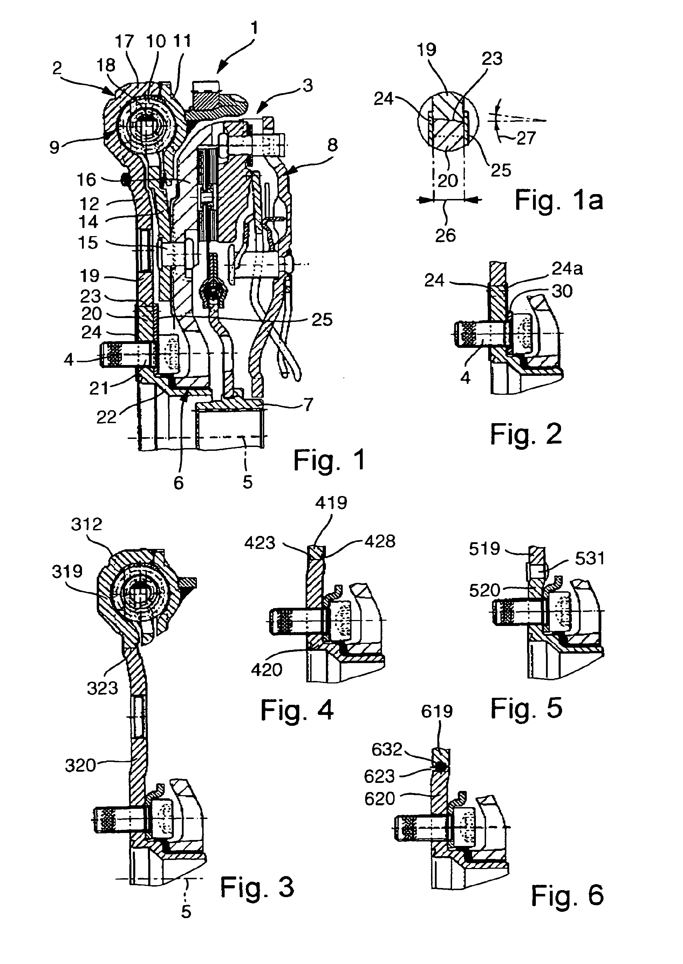

In Figur 1 ist teilweise und im Schnitt eine Drehmomentübertragungseinrichtung dargestellt, die im vorliegenden Falle ein so genanntes Zweimassenschwungrad 1 bildet. Das Zweimassenschwungrad 1 besteht aus einer Primärschwungmasse 2 sowie einer Sekundärschwungmasse 3. Die Primärschwungmasse 2 ist mit einer nicht dargestellten Abtriebswelle einer Brennkraftmaschine befestigbar, und zwar bei dem dargestellten Ausführungsbeispiel mittels einer Mehrzahl von Schrauben 4, die umfangsmäßig verteilt sind. Das Zweimassenschwungrad 1 ist um eine Rotationsachse 5 verdrehbar. Die beiden Schwungmassen 2 und 3 sind über eine Lagerung 6, die hier durch eine Gleitlagerung gebildet ist, verdrehbar zueinander gelagert, wobei die Lagerung 6 radial innerhalb der Schrauben 4 angeordnet ist.

Auf der Sekundärschwungmasse 3 ist unter Zwischenlegung einer Kupplungsscheibe 7 eine Reibungskupplung 8 befestigt. Mittels der Reibungskupplung 8 und der Kupplungsscheibe 7 ist das Zweimassenschwungrad 1 mit einer nicht näher dargestellten Eingangswelle eines Getriebes verbindbar und von dieser wiederum trennbar.

Zwischen den beiden Schwungmassen 2 und 3 ist eine Dämpfungseinrichtung 9 wirksam, welche Energiespeicher 10 umfasst, die bei dem dargestellten Ausführungsbeispiel durch Schraubenfedern gebildet sind.

Die beiden Schwungmassen 2 und 3 besitzen Beaufschlagungsbereiche, mittels derer die Energiespeicher 10 komprimierbar sind. Bei dem dargestellten Ausführungsbeispiel sind die an der Primärschwungmasse 2 vorgesehenen Beaufschlagungsbereiche in an sich bekannter Weise durch in die die Primärschwungmasse bildenden Bauteile 11, 12 eingebrachte Anformungen gebildet. Die von der Sekundärschwungmasse 3 getragenen Beaufschlagungsbereiche sind bei dem dargestellten Ausführungsbeispiel durch die radial äußeren Bereiche 13 eines flanschartigen Bauteils 14 gebildet, welches radial innen über Niete 15 mit dem eine Reibfläche für die Kupplungsscheibe 7 bildenden, ringförmigen Massenbauteil 16 fest verbunden ist. Die Beaufschlagungsbereiche 13 sind durch radiale Arme bzw. Ausleger des flanschartigen Bauteils 14 gebildet.

Das vorzugsweise durch Kaltumformung von Blechmaterial hergestellte Bauteil 12 dient zur Befestigung der Primärschwungmasse 2 bzw. des gesamten Zweimassenschwungrades 1 an der Antriebswelle einer Brennkraftmaschine. Radial außen besitzt das Bauteil 12 einen hier einstückig ausgebildeten, axialen Ansatz 17, an dem das hier ebenfalls aus Blech hergestellte, ringförmige Bauteil 11 befestigt ist. Die beiden Bauteile 11 und 12 bilden einen ringförmigen Raum 18, der zumindest teilweise mit einem viskosen Medium, wie beispielsweise Fett, gefüllt sein kann.

Bezüglich des prinzipiellen, weiteren Aufbaus und der Wirkungsweise derartiger Schwingungsdämpfer wird auf die DE 37 21 705 A1, DE 37 21 712 A1, DE 37 21 711 A1, DE 40 18 321 A1, DE 41 17 584 A1, 41 17 582 A1 und DE 41 17 579 A1 verwiesen.

Das hier zur Drehmomenteinleitung in das Zweimassenschwungrad 1 dienende, scheibenförmige bzw. ringartige Bauteil 12 ist derart aufgebaut bzw. ausgebildet, dass die im Endbereich der mit diesem Bauteil 12 verbundenen Antriebswelle, wie insbesondere Kurbelwelle einer Brennkraftmaschine, auftretenden Axial- und Biegeschwingungen zumindest teilweise gefiltert bzw. gedämpft werden. Dadurch können die durch derartige Schwingungen erzeugten Anregungen, welche normalerweise auf die Primärschwungmasse 2 übertragen werden und Axialsowie Taumelschwingungen dieser Schwungmasse bewirken, auf ein zumindest akzeptables Maß reduziert werden.

Um eine zumindest teilweise schwingungsmäßige Entkoppelung der die Primärschwungmasse 2 bildenden Bauteile gegenüber den im Endbereich der Abtriebswelle einer Brennkraftmaschine vorhandenen Schwingungen zu erzielen, ist das scheibenförmige Bauteil 12 in wenigstens zwei ringartige Elemente 19, 20 unterteilt, die bei dem in Figur 1 dargestellten Ausführungsbeispiel unmittelbar aufeinander zentriert sind. Das innere, ringartige Element 20 besitzt Ausnehmungen 21 zur Durchführung der Befestigungsschrauben 4. Das hier dargestellte, ringartige Innenelement 20 besitzt weiterhin einen einstückig angeformten, axialen Ansatz 22, an dem die Sekundärschwungmasse 3 gelagert ist, und zwar bei dem dargestellten Ausführungsbeispiel über eine Gleitlagerung. Der axiale Ansatz 22 könnte jedoch auch durch ein getrenntes Bauteil gebildet sein, das einen radial verlaufenden Flansch aufweisen könnte, der ebenfalls mittels der Schrauben 4 axial verspannt werden könnte, zum Beispiel gegen ein dann lediglich scheibenartig ausgebildetes Innenelement 20.

Das ringartige Außenelement 19 dient zur Bildung des ringförmigen Raumes 18 und zur Beaufschlagung der Energiespeicher 10.

In besonders vorteilhafter Weise können die beiden Elemente 19 und 20 zunächst aus einem gleichen Flachmaterial, also zusammenhängend, hergestellt und danach durch einen Trennschnitt separiert werden. Ein derartiger Trennschnitt kann beispielsweise mittels eines Stanzwerkzeuges, also durch eine Stanzoperation, erfolgen. Nach einem derartigen Trennen der zunächst einstückig miteinander verbundenen Elemente 19 und 20 können diese wiederum in die in Figur 1 dargestellte Relativposition aufeinander geschoben bzw. zurückgedrückt werden. Dieser Vorgang kann unmittelbar nach erfolgter Trennung und in vorteilhafter Weise in der gleichen Stanzstufe erfolgen. Für manche Anwendungsfälle kann es auch vorteilhaft sein, wenn nach dem Zusammenfügen der beiden Elemente 19 und 20 diese zumindest geringfügig axial zueinander versetzt angeordnet sind, da dadurch durch entsprechende Ausgestaltung der Trennflächen eine bessere Reib- und/oder formschlüssige Verbindung zwischen den beiden Elementen 19 und 20 erzielbar ist.

Besonders vorteilhaft kann es sein, wenn das verwendete Trennverfahren gewährleistet, dass beim wieder Aufeinanderdrücken bzw. Aufeinanderpressen der beiden Elemente 19, 20 im Bereich der an diesen Elementen 19, 20 gebildeten Trennflächen eine zumindest reibschlüssige Verbindung entsteht. Um die durch Aufeinanderpressen der beiden Elemente 19, 20 herzustellende Verbindung, welche eine Drehmomentübertragung zwischen diesen beiden Elementen 19, 20 gewährleisten soll, zu verbessern, kann es vorteilhaft sein, wenn mittels des Trennverfahrens Trennflächen entstehen, die eine gewisse Rauhigkeit bzw. Oberflächenausbrüche besitzen. Dadurch kann beim Aufeinanderpressen der beiden Elemente 19, 20 auch zumindest eine Vielzahl von kleinen formschlüssigen Verbindungen entstehen.

Wie aus Figur 1 ersichtlich ist, ist die Trennstelle 23 zwischen den beiden ringartigen Elementen 19, 20 radial verhältnismäßig nahe an den Schrauben 4 bzw. den Ausnehmungen 21 vorgesehen.

Zur axialen Sicherung der beiden ringartigen Elemente 19 und 20 sind bei dem in Figur 1 dargestellten Ausführungsbeispiel beidseits des ringförmigen Bauteils 12 Scheiben 24, 25 angeordnet, die hier ebenfalls mittels der Schrauben 4 bei Montage des Zweimassenschwungrades 1 auf die Abtriebswelle einer Brennkraftmaschine axial verspannt werden. Hierfür besitzen die Scheiben 24, 25 ebenfalls entsprechende Ausnehmungen für die Schrauben 4.

Wie in Zusammenhang mit Figur 1 a ersichtlich ist, kann es auch besonders vorteilhaft sein, wenn die eine Trennstelle 23 bildenden Trennflächen der beiden Elemente 19, 20 zumindest über einen Teilbereich der Materialdicke 26 einen in Achsrichtung der ringartigen Elemente 19, 20 kegelstumpfartig bzw. konusartig verlaufenden Abschnitt bilden, wodurch zumindest in einer axialen Relativbewegungsmöglichkeit zwischen den beiden ringartigen Elementen 19, 20 eine formschlüssige Verbindung gebildet wird. Bei dem dargestellten Ausführungsbeispiel erstreckt sich die Trennstelle 23 praktisch über die gesamte Dicke 26 kegelstumpfartig, und zwar entsprechend dem idealisiert dargestellten Keilwinkel 27. Bei einer Ausgestaltung der Trennstelle 23 gemäß Figur 1a kann evtl. die auf der linken Seite vorgesehene Sicherungsscheibe 24 entfallen, da nach der Montage des ringartigen Innenelementes 20 auf der entsprechenden Welle das Außenelement 19 in Richtung nach links durch die besondere Ausgestaltung der Trennstelle 23 axial gesichert ist. Es ist also dann lediglich eine formschlüssige, axiale Verbindung auf der Seite des durch die beiden Elemente 19, 20 gebildeten, scheibenförmigen Bauteils notwendig, welche der fiktiven Spitze des kegelstumpfförmigen Abschnittes der Trennstelle 23 zugewandt ist. bei dem dargestellten Ausführungsbeispiel ist die erwähnte formschlüssige Verbindung durch die Scheibe 25 gewährleistet. Eine derartige formschlüssige Verbindung könnte aber auch durch zumindest partiell im Bereich der Trennstelle 23 eingebrachte und über den Umfang verteilte Materialverformungen, wie zum Beispiel Materialverstemmungen, gebildet sein. Eine derartige Materialverformung kann jedoch auch über den gesamten Umfang der Trennstelle 23 an zumindest einem der Elemente 19, 20 eingebracht werden. In Figur 4 ist eine derartige Verformung bzw. Verstemmung im Bereich einer Trennstelle 423 mit dem Bezugszeichen 428 gekennzeichnet. Bei dem dargestellten Ausführungsbeispiel gemäß Figur 4 ist lediglich auf der rechten Seite zumindest eine Materialverformung bzw. -verstemmung angedeutet. Die ringartigen Elemente 419, 420 könnten jedoch auch mittels beidseits derselben vorgesehenen Materialverformungen zueinander axial gesichert sein.

Wie aus Figur 1 ersichtlich ist, besitzen die Sicherungsscheiben 24, 25 eine unterschiedliche Materialdicke. Das eine derartige Scheibe bildende Material kann derart ausgewählt werden und bezüglich der Dicke derart dimensioniert sein, dass die entsprechende Scheibe axiale Federeigenschaften aufweist.

Bei der in Figur 2 dargestellten Ausführungsform sind zwei Sicherungsscheiben 24, 24a vorgesehen, welche identisch ausgebildet sind. Zwischen der Sicherungsscheibe 24a und den Köpfen der Schrauben 4 ist eine Unterlegscheibe 30 vorgesehen. In vorteilhafter Weise kann die Unterlegscheibe 30 ringförmig ausgebildet sein und für alle Schrauben 4 als Unterlegscheibe dienen.

Bei der in Figur 3 dargestellten Ausführungsform ist die Trennstelle 323 zwischen dem äußeren ringartigen Element 319 und dem inneren ringartigen Element 320 auf einem verhältnismäßig großen Durchmesser angeordnet. Wie bereits erwähnt, könnte das durch die ringartigen Elemente 319, 320 gebildete, scheibenförmige Bauteil 312 auch mehr als eine sich über den Umfang erstreckende Trennstelle 323 aufweisen. So könnte beispielsweise bei einer Ausführungsform gemäß Figur 3 auch eine der Trennstelle 23 gemäß Figur 1 entsprechende Trennstelle radial außerhalb der Schrauben 324 und angrenzend an diese vorgesehen werden.

Bei der in Figur 5 dargestellten Ausführungsform wird die axiale Sicherung zwischen dem ringartigen Innenelement 520 und dem ringartigen Außenelement 519 mittels mehrerer, über den Umfang im Bereich der entsprechenden Trennstelle vorgesehener Nieten 531 gewährleistet.

Bei der Ausführungsform gemäß Figur 6 ist zwischen dem ringartigen Innenelement 620 und dem ringartigen Außenelement 619 zumindest ein radial zwischengelegtes Bauteil 632 vorgesehen. Das Bauteil 632 kann in vorteilhafter Weise durch ein Drahtformstück gebildet sein, wobei der Draht zum Beispiel einen ringförmigen Querschnitt aufweisen kann. Dieses Drahtformstück 632 kann sich zumindest annähernd über den gesamten Umfang der Trennstelle 623 erstrecken, also praktisch ringförmig ausgebildet sein. Es können jedoch auch mehrere sektorförmige Drahtformstücke, welche über den Umfang verteilt sind, vorgesehen werden. Auch könnten einzelne, über den Umfang, vorzugsweise gleichmäßig verteilte Kugeln radial zwischen den beiden Elementen 619, 620 vorgesehen werden. Die zwischen den beiden Elementen 619 und 620 vorgesehenen Bauteile können zwischen die beiden Elemente eingepresst werden. Zur Bildung des für die Teile 632 erforderlichen Bauraumes werden die Konturen der Elemente 619, 620 entsprechend gestanzt, und falls erforderlich, durch Prägen geformt. Zur axialen Sicherung zwischen den einzelnen Teilen 619, 632, 620 können, wie bereits in Zusammenhang mit den anderen Ausgestaltungsformen beschrieben, zusätzliche Sicherungsscheiben oder aber Materialverformungen, die einen axialen Zusammenhalt gewährleisten, verwendet werden.

Obwohl es vorteilhaft sein kann, wenn die ringartigen Innen- und Außenelemente aus dem gleichen Material hergestellt werden, kann es gemäß einer nicht unter Schutz gestellten Ausführungsform für manche Anwendungsfälle auch zweckmäßig sein, wenn die Teile aus verschiedenen Materialien bestehen, welche die gewünschten Eigenschaften, zum Beispiel Elastizität und/oder Wärmeausdehnungskoeffizient und/oder Wärmeleitungskoeffizient, aufweisen. So kann beispielsweise zur Bildung zumindest eines dieser Elemente auch Aluminium oder Stahlguss verwendet werden.

Bei Verwendung von unterschiedlichen Materialien, wie zum Beispiel Federstahl und Baustahl, können die ein scheibenförmiges Bauteil bildenden Elemente auch mittels Schweißverbindungen, insbesondere Laserstrahlschweißverbindungen, miteinander verbunden werden. Die entsprechenden Schweißverbindungen können dabei auch stellenweise und über den Umfang verteilt vorgesehen werden. Es kann jedoch auch eine durchgehende Schweißnaht Verwendung finden.

Bei einer Ausgestaltung gemäß Figur 6, bei der zwischen den das scheibenförmige Bauteil 619 bildenden ringartigen Elementen zumindest ein Zwischenstück 632 vorgesehen ist, können zur Bildung eines derartigen Zwischenstücks auch Kunststoffteile bzw. Hartgummiteile verwendet werden. Diese Teile sind dabei vorzugsweise hitzeresistent.

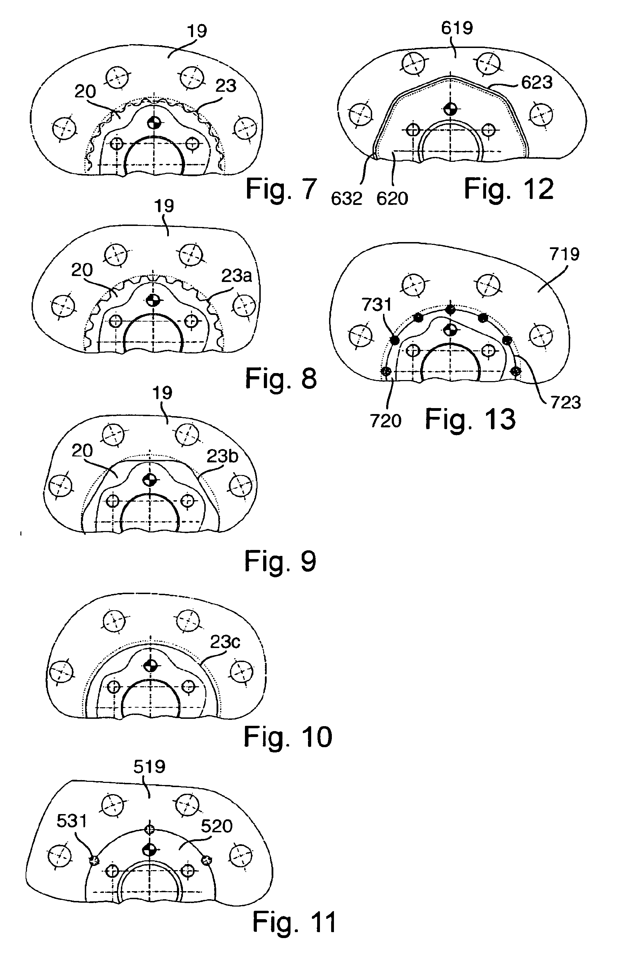

Obwohl es für viele Anwendungsfälle ausreichend sein kann, wenn die eine Trennstelle 23, 323, 423, 623 bildenden und sich radial gegenüber liegenden Flächen der übereinander angeordneten, ringartigen Elemente eine praktisch kreisringförmige Gestalt aufweisen, kann es für eine Vielzahl von Anwendungsfällen zweckmäßig sein, wenn die diese Trennstellen bildenden Flächen zwar einen mit der Rotationsachse 5 des entsprechenden scheibenförmigen Bauteils zumindest annähernd zusammenfallenden Mittelpunkt aufweisen, jedoch einen von einer Kreisform abweichenden Verlauf besitzen. So könnte beispielsweise die Trennstelle 23 bzw. die diese bildenden Trennflächen der Elemente 19 und 20 eine ovalförmige Gestalt besitzen. Weitere Ausgestaltungsformen derartiger Trennstellen bzw. Trennflächen sind in den Figuren 7 bis 9 dargestellt. In Figur 7 ist der Verlauf der Trennstelle 23 wellenförmig über den Umfang ausgebildet. Durch den gleichmäßigen, wellenförmigen Verlauf der Trennstelle 23 werden am radial inneren Rand des Außenelementes 19 und am radial äußeren Rand des Innenelementes 20 abgerundete Zähne gebildet, die radial ineinander greifen und zur Erhöhung des übertragbaren Drehmomentes dienen. Durch den gewellten Verlauf der Trennstelle 23 wird auch die wirksame Länge bzw. Fläche dieser Trennstelle 23 vergrößert.

In Figur 8 ist eine ähnliche Trennstelle 23a dargestellt, wobei diese jedoch derart geführt ist, dass radial ineinander greifende Keilverzahnungen an den Elementen 19, 20 gebildet sind.

In Figur 9 ist die zwischen den beiden Elementen 19, 20 verlaufende Trennstelle 23b polygonartig ausgebildet.

Bei der Ausgestaltung gemäß Figur 10 ist die Trennstelle 23c kreisförmig ausgebildet.

Figur 11 zeigt eine umfangsmäßige Verteilung von Nieten 531 gemäß Figur 5. Wie bereits erwähnt, dienen derartige Niete zur axialen Sicherung der beiden Elemente 519, 520. Gleichzeitig können die Niete 531 das übertragbare Drehmoment erhöhen.

In Figur 12 ist die Trennstelle 623 gemäß Figur 6 dargestellt. Dabei ist die Führung der Trennstelle 623 polygonartig ausgebildet und der zwischen den beiden Elementen 619, 620 angeordnete Drahtring 632 hat eine entsprechend angepasste, polygonartige Ausgestaltung.

In Figur 13 ist noch eine Ausführungsform dargestellt, bei der anstatt von Nieten 531, wie in Figur 11, eine Vielzahl von aus Kunststoff oder Hartgummi bestehenden Zwischenelementen 731 im Bereich einer Trennstelle 723 vorgesehen sind. Bei dem dargestellten Ausführungsbeispiel sind die Elemente 719, 720 derart ausgestaltet, dass sie im Bereich der Trennstelle 723 in ähnlicher Weise Kontakt haben, wie dies in Zusammenhang mit Figur 1 für die Trennstelle 23 beschrieben wurde. Durch entsprechende Wahl der Festigkeit der Zwischenelemente 731 könnte im Bereich der Trennstelle 723 zwischen Zwischenelementen 731 auch zumindest ein geringer radialer Spalt vorhanden sein. Zweckmäßig kann es auch sein, wenn ein derartiger Spalt nur stellenweise im Bereich der Trennstelle 723 zwischen benachbarten Zwischenelementen 731 vorhanden ist.

### Bezugszeichenliste

- 1: Zweimassenschwungrad
- 2: Primärschwungmasse
- 3: Sekundärschwungmasse
- 4: Schrauben
- 5: Rotationsachse
- 6: Lagerung
- 7: Kupplungsscheibe
- 8: Reibungskupplung
- 9: Dämpfungseinrichtung
- 10: Energiespeicher
- 11: Bauteil
- 12: Bauteil
- 13: Beaufschlagungsbereiche
- 14: flanschartiges Bauteil
- 15: Niete
- 16: Massenbauteil
- 17: axialer Ansatz
- 18: Raum
- 19: ringartiges Außenelement
- 20: ringartiges Innenelement
- 21: Ausnehmungen
- 22: axialer Ansatz
- 23: Trennstelle
- 23a: Trennstelle
- 23b: Trennstelle
- 23c: Trennstelle
- 24: Sicherungsscheiben
- 24a: Sicherungsscheiben
- 25: Scheiben
- 26: Materialdicke
- 27: Keilwinkel
- 30: Unterlegscheibe
- 312: scheibenförmiges Bauteil
- 319: ringartiges Element
- 320: ringartiges Element
- 323: Trennstelle
- 324: Schrauben
- 419: ringartiges Element
- 420: ringartiges Element
- 423: Trennstelle
- 428: Materialverformung
- 519: ringartiges Außenelement
- 520: ringartiges Innenelement
- 531: Nieten
- 619: ringartiges Außenelement
- 620: ringartiges Innenelement
- 623: Trennstelle
- 632: Zwischenstück; Drahtring
- 719: Elemente
- 720: Elemente
- 723: Trennstelle
- 731: Zwischenelemente

## Patentansprüche

1. Schwingungsisolierendes, scheibenförmiges Bauteil zur Verwendung in einer Drehmomentübertragungseinrichtung, wobei das scheibenförmige Bauteil radial innere Bereiche zur Befestigung mit der Abtriebswelle einer Brennkraftmaschine aufweist und radial äußere Bereiche besitzt zur Drehmomentübertragung, wobei das scheibenförmige Bauteil aus wenigstens einem ringartigen Innenelement und einem auf diesem aufgepressten, ringartigen Außenelement besteht, **dadurch gekennzeichnet, dass** das Innenelement (20) und das Außenelement (19) mittels eines Trennschnittes (23) aus dem gleichen Flachmaterial hergestellt sind und die drehfeste Verbindung der Elemente durch Zurückdrücken des Innenelements (20) in das Außenelement (19) gebildet ist.

2. Scheibenförmiges Bauteil nach Anspruch 1, **dadurch gekennzeichnet, dass** der Trennschnitt (23) gestanzt ist.

3. Scheibenförmiges Bauteil nach Anspruch 1 oder 2, **dadurch gekennzeichnet, dass** das ringartige Innenelement Verschraubungsausnehmungen (21) aufweist und die Trennstelle (23) radial außerhalb dieser Ausnehmungen vorgesehen ist.

4. Scheibenförmiges Bauteil nach Anspruch 1 oder 2, **dadurch gekennzeichnet, dass** das ringartige Innenelement Verschraubungsausnehmungen (21) aufweist und die Trennstelle (23) radial angrenzend an diese Ausnehmungen vorgesehen ist.

5. Scheibenförmiges Bauteil nach wenigstens einem der vorhergehenden Ansprüche, **dadurch gekennzeichnet, dass** die die Trennstelle (23) bildenden Trennflächen der beiden Elemente mit Stanzausbrüchen ausgebildet sind, die zumindest über einen Teilbereich der Materialdicke (26) der ineinander gepressten Elemente (19, 20) einen in Achsrichtung des scheibenförmigen Bauteils kegelstumpfartig verlaufenden Abschnitt bilden, wodurch eine axiale, formschlüssige Verbindung gebildet ist.

6. Scheibenförmiges Bauteil nach Anspruch 5, **dadurch gekennzeichnet, dass** auf der der fiktiven Spitze der kegelstumpfförmigen Abschnitte zugewandten Seite des scheibenförmigen Bauteils (12) die beiden Elemente eine weitere axial wirksame, formschlüssige Verbindung besitzen.

7. Scheibenförmiges Bauteil nach Anspruch 6, **dadurch gekennzeichnet, dass** die weitere formschlüssige Verbindung durch zumindest partiell im Bereich der Trennstelle eingebrachte Materialverstemmungen (428) gebildet ist.

8. Ringförmiges Bauteil nach wenigstens einem der vorhergehenden Ansprüche, **dadurch gekennzeichnet, dass** die Trennstelle derart verläuft, dass sie zwar einen mit der Rotationsachse (5) des scheibenförmigen Bauteils zumindest annähernd zusammenfallenden Mittelpunkt aufweist, jedoch von einer Kreisringform abweicht.

9. Scheibenförmiges Bauteil nach Anspruch 8, **dadurch gekennzeichnet, dass** die Trennstelle (23) einen polygonartigen oder einen verzahnungsähnlichen Verlauf besitzt.

10. Scheibenförmiges Bauteil nach wenigstens einem der vorhergehenden Ansprüche, **dadurch gekennzeichnet, dass** zusätzlich zu der zwischen den die Trennstelle bildenden Trennflächen vorhandenen Pressverbindung eine axiale Sicherung zwischen dem inneren und dem äußeren Element vorhanden ist.

11. Scheibenförmiges Bauteil nach Anspruch 10, **dadurch gekennzeichnet, dass** die zusätzliche axiale Sicherung durch wenigstens ein auf zumindest einer Seite des scheibenförmigen Bauteils befestigtes, zusätzliches Element (24, 25) gebildet ist.

12. Scheibenförmiges Bauteil nach Anspruch 11, **dadurch gekennzeichnet, dass** das wenigstens eine zusätzliche Element (24, 25) scheibenförmig ausgebildet ist.

13. Scheibenförmiges Bauteil nach Anspruch 12, **dadurch gekennzeichnet, dass** das scheibenförmige Element mittels der durch die Öffnungen des inneren Elements durchführbaren Schrauben verspannbar ist.

14. Scheibenförmiges Bauteil nach Anspruch 12, **dadurch gekennzeichnet, dass** das scheibenförmige Element axial federnd ausgebildet ist.

15. Scheibenförmiges Bauteil nach Anspruch 12, **dadurch gekennzeichnet, dass** das wenigstens eine scheibenförmige Element mit einem der Elemente fest verbunden ist und an dem anderen Element mit Vorspannung federnd anliegt.

16. Scheibenförmiges Bauteil nach wenigstens einem der vorhergehenden Ansprüche, **dadurch gekennzeichnet, dass** es ein Bestandteil eines Schwungrades (1) ist.

17. Scheibenförmiges Bauteil nach Anspruch 16, **dadurch gekennzeichnet, dass** es Bestandteil eines Zweimassenschwungrades (1) ist, welches eine mit der Abtriebswelle der Brennkraftmaschine verbindbare Primärmasse und eine auf dieser verdrehbar gelagerte Sekundärmasse aufweist.

18. Scheibenförmiges Bauteil nach Anspruch 17, **dadurch gekennzeichnet, dass** es zur Bildung der Primärmasse (2) des Zweimassenschwungrades (1) dient.

19. Scheibenförmiges Bauteil nach Anspruch 17 oder 18, **dadurch gekennzeichnet, dass** es mit seinen radial äußeren Bereichen zumindest teilweise eine Kammer (18) zur Aufnahme von in Umfangsrichtung wirkenden Schraubenfedern (10) bildet.

20. Scheibenförmiges Bauteil nach einem der Ansprüche 16 bis 19, **dadurch gekennzeichnet, dass** es einen Bestandteil der Primärmasse eines Zweimassenschwungrades bildet, wobei das scheibenartige Bauteil (12) radial innen einen axialen Ansatz (22) trägt, an dem die Sekundärmasse gelagert ist.

21. Scheibenförmiges Bauteil nach Anspruch 19, **dadurch gekennzeichnet, dass** die Sekundärmasse (3) Beaufschlagungsbereiche (13) trägt, welche in die zumindest teilweise durch das scheibenartige Bauteil gebildete Kammer (18) eingreifen zur Beaufschlagung der in Umfangsrichtung wirksamen Schraubenfedern (10).

## Claims

1. Vibration-insulating, disk-shaped component for use in a torque-transmitting device, where the disk-shaped component has radially inner areas for attachment to the output shaft of a combustion engine and radially outer areas for torque transmission, where the disk-shaped component is made up of at least one ring-type inner element and a ring-type outer element pressed on the latter, **characterized in that** the inner element (20) and the outer element (19) are made from the same flat material by means of a separating cut (23), and the rotationally fixed connection of the elements is formed by pushing the inner element (20) back into the outer element (19).

2. Disk-shaped component according to Claim 1, **characterized in that** the separating cut (23) is stamped.

3. Disk-shaped component according to Claim 1 or 2, **characterized in that** the ring-type inner element has threaded recesses (21), and the separation line (23) is provided radially outside of these recesses.

4. Disk-shaped component according to Claim 1 or 2, **characterized in that** the ring-type inner element has threaded recesses (21), and the separation line (23) is provided radially adjacent to these recesses.

5. Disk-shaped component according to at least one of the preceding claims, **characterized in that** the separation surfaces of the two elements which form the separation line (23) are formed with stamped break-outs that form a section which runs in the nature of a truncated cone in the axial direction of the disk-shaped component over at least a part of the material thickness (26) of the elements (19, 20) pressed into each other, whereby an axial, positive-locking connection is formed.

6. Disk-shaped component according to Claim 5, **characterized in that** on the side of the disk-shaped component (12) facing the imaginary point of the sections in the shape of a truncated cone the two elements have an additional, axially operative positive-locking connection.

7. Disk-shaped component according to Claim 6, **characterized in that** the additional positive-locking connection is formed by material caulking (428) inserted at least partially in the area of the separation line.

8. Disk-shaped component according to at least one of the preceding claims, **characterized in that** while the separation line runs in such a way that it does have a center point that coincides at least approximately with the axis of rotation (5) of the disk-shaped component, it differs from a circular ring shape.

9. Disk-shaped component according to Claim 8, **characterized in that** the separation line (23) has a polygonal or gear-tooth-like pattern.

10. Disk-shaped component according to at least one of the preceding claims, **characterized in that** in addition to the compression connection present between the separation surfaces that form the separation line, an axial protective device is present between the inner and the outer element.

11. Disk-shaped component according to Claim 10, **characterized in that** the additional axial protective device is formed by at least one additional element (24, 25) attached on at least one side of the disk-shaped component.

12. Disk-shaped component according to Claim 11, **characterized in that** at least one additional element (24, 25) is of disk-shaped design.

13. Disk-shaped component according to Claim 12, **characterized in that** the disk-shaped element may be secured by means of the screws that may be passed through the openings of the inner element.

14. Disk-shaped component according to Claim 12, **characterized in that** the disk-shaped element is of axially elastic design.

15. Disk-shaped component according to Claim 12, **characterized in that** the at least one disk-shaped element is firmly connected to one of the elements, and rests flexibly against the other element with pre-tensioning.

16. Disk-shaped component according to at least one of the preceding claims, **characterized in that** it is part of a flywheel (1).

17. Disk-shaped component according to Claim 16, **characterized in that** it is part of a dual mass flywheel (1), which has a primary mass that is connectable to the output shaft of the combustion engine, and a secondary mass that is rotatably supported on the primary mass.

18. Disk-shaped component according to Claim 17, **characterized in that** it serves to form the primary mass (2) of the dual mass flywheel (1).

19. Disk-shaped component according to Claim 17 or 18, **characterized in that** its radially outer areas at least partially form a chamber (18) to receive coil springs (10) acting in the circumferential direction.

20. The disk-shaped component according to one of Claims 16 through 19, **characterized in that** it forms part of the primary mass of a dual-mass flywheel, where the disk-shaped component (12) bears on its radially inner side an axial shoulder (22) on which the secondary mass is supported.

21. Disk-shaped component according to Claim 19, **characterized in that** the secondary mass (3) has pressurization areas (13) which engage in the chamber (18) at least partially formed by the disk-shaped component, to put pressure on the coil springs (10) acting in the circumferential direction.

## Revendications

1. Elément en forme de disque isolant des vibrations à utiliser dans un dispositif de transmission de couple de rotation, l'élément en forme de disque présentant radialement des zones intérieures pour la fixation à l'arbre de sortie d'un moteur à combustion interne et possédant radialement des zones extérieures pour la transmission du couple de rotation, l'élément en forme de disque étant composé d'au moins un élément intérieur annulaire et d'un élément extérieur annulaire engagé par pression sur ce dernier, **caractérisé en ce que** l'élément intérieur (20) et l'élément extérieur (19) sont fabriqués à partir du même matériau plat au moyen d'une coupe (23) et **en ce que** la liaison des éléments résistante à la torsion est établie en refoulant l'élément intérieur (20) dans l'élément extérieur (19).

2. Elément en forme de disque selon la revendication 1, **caractérisé en ce que** la coupe (23) est estampée.

3. Elément en forme de disque selon la revendication 1 ou 2, **caractérisée en ce que** l'élément intérieur annulaire présente des évidements de vissage (21) et **en ce que** le point de coupe (23) est prévu radialement en dehors de ces évidements.

4. Elément en forme de disque selon la revendication 1 ou 2, **caractérisé en ce que** l'élément intérieur annulaire présente des évidements de vissage (21) et **en ce que** le point de coupe (23) est prévu radialement adjacent à ces évidements.

5. Elément en forme de disque selon au moins l'une quelconque des revendications précédentes, **caractérisé en ce que** les surfaces de séparation des deux éléments qui forment le point de coupe (23) sont réalisées avec des découpures d'estampage qui forment, au moins sur une zone partielle de l'épaisseur du matériau (26) des éléments pressés l'un dans l'autre (19, 20), une section tronconique dans le sens de l'axe de l'élément en forme de disque, grâce à quoi une liaison axiale par forme complémentaire est formée.

6. Elément en forme de disque selon la revendication 5, **caractérisé en ce que** les deux éléments possèdent une autre liaison par forme complémentaire à action axiale sur la face de l'élément en forme de disque (12) dirigée vers la pointe fictive des sections tronconiques.

7. Elément en forme de disque selon la revendication 6, **caractérisé en ce que** l'autre liaison par forme complémentaire est formée par des rabattements de matériau (428) effectués au moins partiellement dans la zone du point de coupe.

8. Elément en forme de disque selon au moins l'une quelconque des revendications précédentes, **caractérisé en ce que** le tracé du point de coupe est tel qu'il comporte certes un point central qui coïncide au moins approximativement avec l'axe de rotation (5) de l'élément en forme de disque mais n'est pas en forme d'anneau de cercle.

9. Elément en forme de disque selon la revendication 8, **caractérisé en ce que** le point de coupe (23) possède un tracé en forme de polygone ou ressemblant à une denture.

10. Elément en forme de disque selon au moins l'une quelconque des revendications précédentes, **caractérisé en ce qu'**en plus de la liaison par pression qui existe entre les surfaces de séparation qui forment le point de coupe, un dispositif de blocage axial entre les éléments intérieur et extérieur est présent.

11. Elément en forme de disque selon la revendication 10, **caractérisé en ce que** le dispositif de blocage axial supplémentaire est formé par au moins un élément supplémentaire (24, 25) fixé sur au moins une face de l'élément en forme de disque.

12. Elément en forme de disque selon la revendication 11, **caractérisé en ce que** l'élément supplémentaire (24, 25) minimum est réalisé en forme de disque.

13. Elément en forme de disque selon la revendication 12, **caractérisé en ce que** l'élément en forme de disque peut être serré au moyen des vis qui peuvent traverser les orifices de l'élément intérieur.

14. Elément en forme de disque selon la revendication 12, **caractérisé en ce que** l'élément en forme de disque est réalisé de manière à être élastique dans le sens axial.

15. Elément en forme de disque selon la revendication 12, **caractérisé en ce que** l'élément en forme de disque minimum est relié de manière fixe à un des éléments et est en contact élastique avec l'autre élément avec une précontrainte.

16. Elément en forme de disque selon au moins une des revendications précédentes, **caractérisé en ce qu'**il fait partie d'un volant (1).

17. Elément en forme de disque selon la revendication 16, **caractérisé en ce qu'**il fait partie d'un volant à double masse (1) qui présente une masse primaire pouvant être reliée à l'arbre de sortie du moteur à combustion interne et une masse secondaire logée sur la masse primaire de manière à pouvoir effectuer une torsion.

18. Elément en forme de disque selon la revendication 17, **caractérisé en ce qu'**il sert à former la masse primaire (2) du volant à double masse (1).

19. Elément en forme de disque selon la revendication 17 ou 18, **caractérisé en ce qu'**avec ses zones extérieures radiales il forme au moins en partie un compartiment (18) destiné à loger des ressorts cylindriques (10) qui agissent dans le sens de la circonférence.

20. Elément en forme de disque selon une des revendications 16 à 19, **caractérisé en ce qu'**il forme une partie de la masse primaire d'un volant à double masse, l'élément en forme de disque (12) portant radialement à l'intérieur une saillie axiale (22) sur laquelle la masse secondaire est logée.

21. Elément en forme de disque selon la revendication 19, **caractérisé en ce que** la masse secondaire (3) porte des zones d'action (13) qui viennent en prise avec le compartiment (18) formé au moins en partie par l'élément en forme de disque pour agir sur les ressorts cylindriques (10) qui agissent eux-mêmes dans le sens de la circonférence.
